# EUROPEAN PATENT SPECIFICATION

(11) **EP 0 312 639 B1**
(45) Date of publication and mention of the grant of the patent: **15.09.1993**
(21) Application number: 87115564.4
(22) Date of filing: 23.10.1987
(51) Int. Cl.: B23K 9/12, B23K 9/10

(54) **Mig welder attachment for an electric hand drill**
MIG-Schweisszubehör für eine elektrische Handbohrmaschine
Accessoire de soudage MIG pour une perceuse électrique à main

(43) Date of publication of application: 26.04.1989
(73) Proprietor: OMNIVERSE RESEARCH, INC., Los Gatos California 85030 (US)
(72) Inventor: Hayes, Peter F., Santa Fe New Mexico 87501 (US)
(74) Representative: Quinterno, Giuseppe

(56) References cited:
- DE-A- 2 650 522
- US-A- 2 490 593
- US-A- 2 909 646
- US-A- 2 931 890
- US-A- 4 079 231
- US-A- 4 703 156

## Description

This invention relates to a consumable wire electrode welding system of the kind defined in the introductory portion of claim 1.

A welding system of this kind is disclosed in DE-A-2 650 522.

The invention also relates to a welder attachment for an electric hand drill.

MIG arc welding apparatus is in high vogue. US-A-4 079 231 is exemplary of such MIG arc welding apparatus. A torch supports a consumable wire electrode, fed to the torch by wire feeder rolls which sandwich the wire to drive it through a passage within the torch. That passage is also subjected to a shielding gas with the gas surrounding and shielding the consumable wire electrode as it exits from a contact tube. It functions to shield the arc which is established between the consumable wire electrode and a second electrode constituted by the workpiece. In that patent, the wire feeder rolls are driven by a motor whose speed is controlled by a motor governor via a control circuit. To effect welding, the operator touches the end of the consumable wire against the workpiece and this results in an instantaneous short circuit across a power supply in a sensing circuit. The sensing circuit provides a low voltage output signal which is fed to the control circuit. The control circuit produces, in turn, an output signal which energizes the welding contactor and the welding contactor produces a signal which turns on the power supply. With the power supply turned on, the arc is immediately established between the consumable wire electrode and the workpiece electrode. Also, in response to the sensing circuit output signal, the control circuit feeds a signal to the motor governor which starts the wire feeder motor. Additionally, the control circuit feeds the signal to the gas supply which initiates flow of a shielding gas to the torch. Upon establishment of the arc between the consumable wire electrode and the workpiece electrode, the output from the sensing circuit terminates. However, the flow of welding current through the cable lead to the torch and thus to the consumable wire electrode is immediately sensed by a current detector circuit, which circuit is connected to a part of the cable lead. The detector circuit produces in turn an output signal which is fed to the control circuit, and the control circuit in response to the output signal, continues to maintain the signal to the welding contactor. This keeps the power supply in circuit and also maintains the signal to the motor governor and the signal to the gas supply so that the motor drive system and the supply of inert gas continues. Thus, the wire feeder motor continues to operate and the flow of shielding gas to the torch is maintained.

Such consumable metal inert gas (MIG) arc welding is in large use because the MIG welders are faster and use less heat (amperage) for a given weld than other common welding methods so that heat distortion of the workpiece is minimal. Such conventional MIG welders may utilize storage batteries as the source of the DC arc current. Rut in each case, the arc and drive power is electronically coupled to yield "semi-automatic" features. MIG welders are not necessarily inexpensive. Units sold under the trademark CENTURY cost about $700 while, a MILLER SPOOLMATIC MIG welder gun alone may cost about $1000 with a further cost of $2,000 for a power source. The MILLER SPOOLMATIC requires electronic modification to a 240 volt AC (household or three-phase industrial current) to obtain a 24 volt DC non-drooping voltage current at the arc. As for the CENTURY unit, which runs on DC batteries, the unit is too large for portability. Cost is high because drive and arc power are electronically coupled. It is designed for use almost exclusively in welding steel and the drive speed is too slow for soft metal welds, particularly aluminum. The long drive train powered by a 24 volt motor causes the Century unit to be less energy-efficient and the push drive of the consumable wire electrode tends to cause "bird-nesting" of the consumable thin wire electrode.

MIG arc welding is also known as "semi-automatic fine wire welding". The term "semi-automatic" refers to the electrical or electronic coupling of arc and drive power in an effort to stabilize the arc voltage independent of human-induced accidental variations in arc distance. In most systems, the arc power source requires expensive electronic components to achieve a "non-drooping voltage" characteristic. In some systems where auto or deep-cycle storage batteries are used as the power source, as in the CENTURY's portable MIG welding system, an expensive and wholly unnecessary electronic couple exists between the drive and the arc. The applicant has determined, and the present invention is based on, the recognition of the inherent stability of arc power when storage batteries are used for the power source. Thus, when auto or deep-cycle storage batteries are used for the arc power source, the resulting arc is so inherently stable that no electric or electronic couple to the drive power is required or desired. The applicant has determined that storage batteries are capable of such power (inherent reserve power) that any attempt at manual modification of arc distance, accidental or intentional, has no appreciable effect on arc stability; specifically on arc voltage. A fortuitous and inherently stable match in arc and power source resistances assures an inherently stable arc gap and stable arc voltage where auto or deep cycle batteries are employed as arc power source. Applicant has determined that where one might expect a manual decrease of welding gun to workpiece distance to decrease arc distance and to decrease arc voltage and a manual increase of welding gun to workpiece distance to increase arc distance and to increase arc voltage, this is in fact not ostensibly the case where, and only where, storage batteries of common auto or deep-cycle type are used as the arc power source. In fact, if the fine wire electrode should contact the workpiece electrode, as it does in initiating the arc, the reserve power of the arc is sufficient to instantaneously melt the electrode, thus opening the arc to a stable gap and initiating the weld process.

Attempts have been made to simplify the handling and feed of the consumable wire to the torch electrode nozzle assembly in such welding equipment. US-A-2 909 646 uses a pistol type welding gun which is provided with a water cooled electrode nozzle assembly through which a shielding gas is directed to the weld area. However, the electrode wire is fed from a separate and isolated box-like structure which encloses an adjustable speed motor operatively coupled to a drive roll and a pressure roll sandwiching the wire. This requires push feeding of the wire a significant distance to the gun and through the gun nozzle assembly. A trigger switch carried on the pistol grip of the welding gun controls drive motor operation for feeding the thin wire electrode and for controlling shield gas and cooling water flow to the gun.

US-A-2 490 593 describes a combined portable welding and pneumatic tool useful in repairing cracked parts or castings by welding where it is usually necessary to first form a channel pocket for the welding material where the part is cracked or requires repair, through the use of a chisel, then to deposit the welding material in the channel or pocket which is preferably done by vibrating a rod of welding material and passing an electric current of lower voltage and high amperage through the stick of welding materials. Finally, it is desirable to peen the deposited welded material to produce a smooth dense surface over the welded portion. The patent employs a simple and efficient tool which may be interchangeably used in performing the chisel, welding and peening operations. The versatile tool includes a magazine for holding a series of rods which can be successively used for welding, incorporates a pulsating hammer, operable to impart strokes of variable force such as light strokes for peening and welding and heavier strokes for chiseling. It has a welding rod holder which comprises a collet for positively holding the welding rod during welding operations. A pulsating hammer is detachably connected to the welding rod holder with a removable shield on the holder for the hammer. A welding rod holder includes means for delivering air from the hammer to the weld and varying the air flow to provide cooling of the desired degree. A pneumatic hammer has the intensity of the hammer pulsations varied by controlling the air exhausted from the hammer. A single valve means variably controls the operation of the pulsating hammer and variably controls the flow of air to the electrode controlling means. A pneumatic hammer has the operated tool insulated to prevent arcing between the tool and the work while carrying on peening or chiseling operations via a quick detachable connection between the body of the pneumatic hammer and the welding rod or the electrode holder, to permit separate use of the hammer for peening or chiseling.

US-A-2 909 646 teaches a welding tool of gun form using a pistol grip trigger mechanism for selectively initiating and shutting off of the movement of the drive of the thin wire and the supply of cooling liquid and inert gas to a pistol type apparatus. US-A-2 490 593 suggests the creating of a combined portable welding a pneumatic tool. US-A-2 909 646 teaches isolation of the wire feed drive from the gun receiving the same, and US-A-2 490 593 suggests only the decoupling of mechanisms integrating a portable welding and pneumatic tool.

It is, therefore, a primary object of the present invention to provide a consumable wire welding system which permits the use of an ordinary electric hand drill for effecting a low cost MIG welder utilizing the variable speed motor of the electric motor hand drill for controlling the amperage of the welder by variable speed driving of the fine wire electrode.

It is a further object of the present invention to provide a highly versatile, low cost portable welding attachment or accessory to an ordinary AC or DC electric hand drill particularly useful in forming a MIG welder which is easy to use, lightweight, and well suited to heavy or light welding.

It is noteworthy that where circumstance dictates the parallel hook-up of both arc and drive to the same batteries, that no destabilizing relationship between arc and drive is implied or in fact exists. Performance remains unaffected regardless of the existence of said circumstantial parallel circuits because the power reserve of said batteries is sufficient to maintain a stable power supply to the drive unit unaffected by the power to the arc.

The above objects are achieved according to the invention by a welding system and a welding attachment whose features are defined in Claims 1 and 9.

The invention also relates to the use of such welding system and welding attachment.

Further characteristics and advantages of the invention will become apparent from the following description with reference to the appended drawings in which :
Figure 1 is a side elevational view of a MIG welder attachment and an electric hand drill to which it is attached and forming a preferred embodiment of the present invention;
Figure 2 is a side elevational view, partially broken away of the drill and attachment shown in Figure 1, with the cover removed;
Figure 3 is a bottom plan view of the assembly of Figure 2; and
Figure 4 is an electrical schematic diagram of a MIG welding system utilizing the attachment shown in Figures 1 through 3, inclusive.

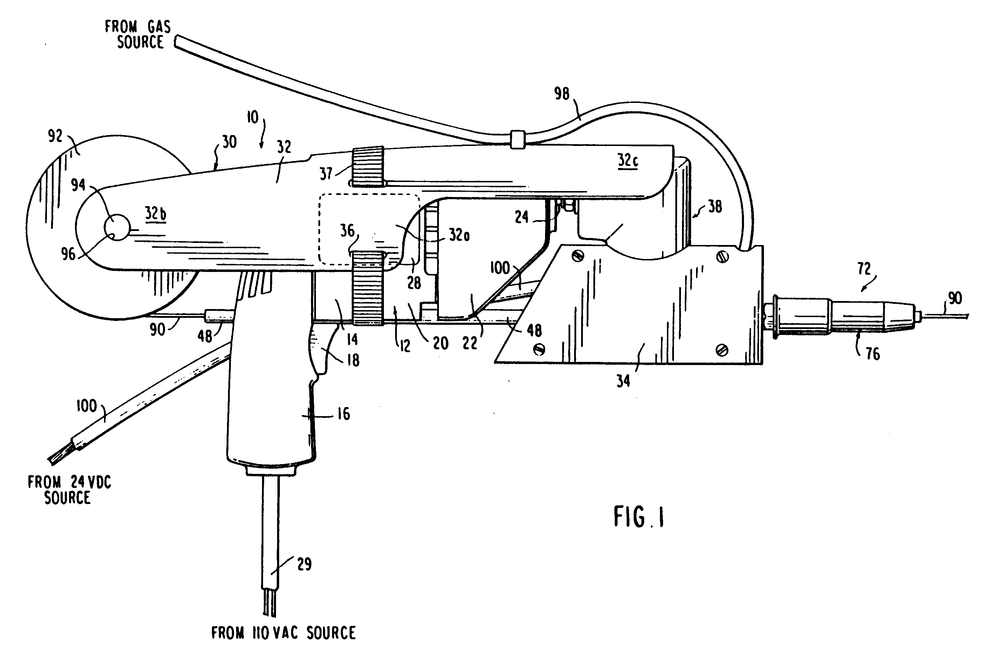

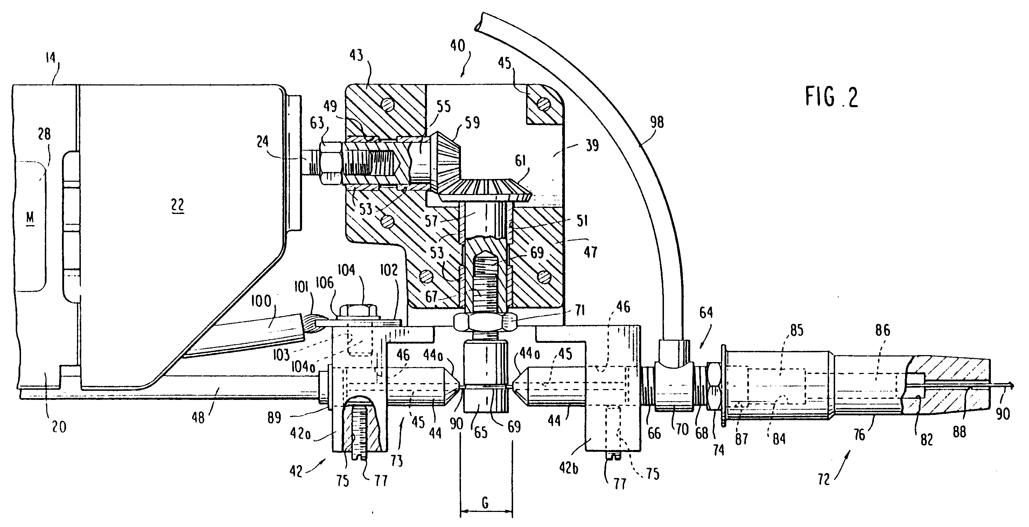

Referring to the drawings, and particularly to Figures 1, 2 and 3, there is shown a MIG arc welder attachment 10 constituting a preferred embodiment of the present invention as mounted to a conventional alternating current electric hand drill indicated generally at 12. Alternatively, the hand drill may be DC powered. The MIG arc welder attachment forms a preferred embodiment of the present invention and constitutes an accessory to the ordinary electric hand drill 12. while all MIG welding equipment is inherently versatile in its ability to achieve good quality results in a wide variety of materials, the extreme simplicity of the MIG welder drill attachment 10 is consistent with and conducive to this versatility. By utilizing attachment 10, it is easy to change loads, tips, gases, polarity, and above all, welding speeds. The ability to vary speed (or amperage) while welding, is a feature of the finest and most expensive welders. In the past, this invariably required the modification of one circuit in order to vary another circuit rendering the control system electronically complex. In contrast, the proliferation of variable speed electric motor drive hand drills insures this feature utilizing the MIG welder attachment of the present invention. Moreover, the user has the option of selecting from a variety of drills for speed, balance, weight, dielectric qualities, etc. For example, the drill 12 may constitute a drill manufactured and sold by Black and Decker under trade designation 3/8" VSR (Variable Speed Reversing). The chuck normally borne by the drill motor shaft 24 may be eliminated, thereby moving the balance of the tool aft. As seen in Figures 1 and 2, the drill casing 14 which is preferably formed of electrically insulating material has, projecting downward therefrom, an integral handle 16 or hand grip bearing a trigger switch 18. The trigger switch includes solid state circuitry (not shown) for varying the current flow through the windings of the electrical motor 28, Figure 2 so as to vary the output speed of the drill output shaft 24 which projects outwardly from casing 14 at the end of the drill gear speed reduction unit 22. An electric drive motor section 20 of casing 14 carries internally the electric motor 28. Conventionally, an electrical cord 29, which may receive current from a 110 volt AC electrical source (not shown), extends from the bottom of the handle 16 or the drill may be powered by internally contained DC batteries.

In terms of the conventional AC hand-held and relatively inexpensive drill 12, there is believed to be no further need of explanation of the drill or its nature of operation. Pressing the switch 18 inwardly into the handle 16 energizes the electrical drive motor 28 and drives it at variable speed depending upon the amount of retraction of the trigger 18.

The present invention is directed to the MIG arc welder attachment 10 which is constituted principally by a cover assembly 30 housing all of the components and including flexible upper dielectric concave cover 32, overlying the top, configured to and partially surrounding the cylindrical drill casing 14. Cover center portion 32a extends over the full length of the drill casing and cover 32 terminates in ends 32b, 32c which extend beyond the drill casing, at respective rear and front ends thereof. The cover assembly 30 is completed by a lower dielectric cover 34 which is removably or detachably mounted to the upper cover via 90° angle drive reduction gear assembly 38. As may be appreciated, since all of the components are either borne by the upper cover 32, lower cover 34, or the right angle drive reduction gear assembly 38 and since these elements are fixed to each other, a simple mechanical expedient may be employed for detachably coupling the MIG arc welder attachment 10 to the hand drill casing 14, specifically via the drill's chuck or, by removing the chuck, via the drill's spindle. As illustrated, the upper cover 32 is of inverted U shape in transverse section with paired sidewalls of center section 32a being slotted at vertically aligned positions through which slots 32 pass a VELCRO® strap 37 to frictionally lock the upper cover 32 closely abut the cylindrical drill casing 14. Additionally, a mechanical connection is effected between the drill output shaft 24 and the drive reduction gear assembly 38 so that the attachment 10 and its components are firmly mechanically attached to the hand drill 12 for operation of the MIG arc welder utilizing these components. A 90° angle drive gear assembly housing 40 is composed of laterally spaced, inverted L shape plates 39 screwed to opposite sides of transverse blocks as at 43, 45 and 47. Blocks 43 and 47 include suitably, horizontal and vertical bores 49 and 51 respectively within which are positioned multiple sleeve bearings 53. Bearings 53 rotatably support shafts 55 and 57 which terminate in a pair of bevel gears 59 and 61, respectively, which gears are enmeshed and which are at right angles to each other. Shaft 55 bears a tapped hole within its end remote from bevel gear 59 which receives the drill shaft 24. Drill output 24 shaft is threaded at its end and preferably threaded into angle drive thread of shaft 55 for the right angle drive reduction gear assembly 38. Right angle shaft 57, at its end opposite bevel gear 61, fixably mounts a single cylindrical drive wheel 65. Drive wheel 65 terminates in a threaded end 67 which is threaded into a tapped bore 69 of shaft 57. A lock nut 71 is threaded to the threaded end 67 of the drive wheel to permit an axially adjustable threaded coupling between drive wheel 65 and its driving shaft 57. The drive wheel 65 is given a certain diameter and is provided with a circumferential groove 69 on its periphery sized to the diameter of a consumable fine wire electrode 90. Wire electrode 90 is driven by being compressed within groove 69 by an idler wheel 54 whose periphery presses with variable pressure against the periphery of drive wheel 65 and sandwiches the wire electrode therebetween.

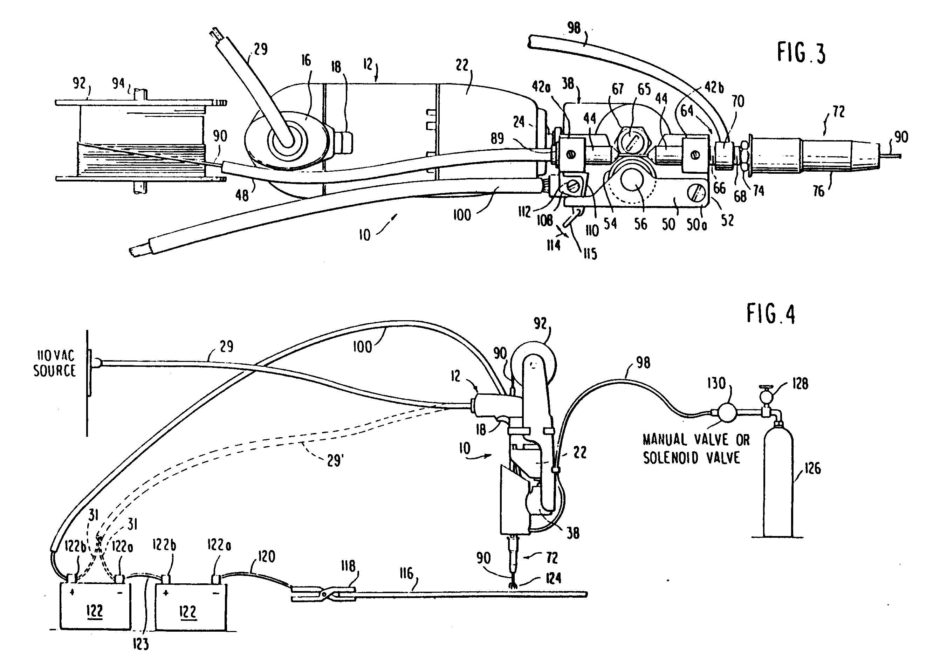

In order to effect that action, a consumable fine wire electrode feed block assembly, indicated generally at 42, is effectively coupled to the right angle drive reduction gear assembly housing 40, specifically to the lower end of that housing. Feed block assembly 42 is composed principally of left and right side block 42a, 42b, respectively, Figure 2, which are spaced from each other, and which are of inverted L shape configuration forming a relatively large rectangular cavity 73 therebetween. The blocks 42a, 42b are provided with cylindrical bores 46 within which are inserted cylindrical wire guides or bushings 44. At right angles to bores 46, are tapped holes 75 for side blocks 42a, 42b within which are threaded set screws 77. The set screws may be loosened to permit insertion of the wire guides or bushings 44 within bores 46, or to adjust them and the set screws are then turned down to lock the bushings in axially spaced positions. The bushings may be shifted axially, the purpose of which is to create a gap G of a certain width between conical ends 44a of the respective bushings 44, supported by the left and right side blocks 42a, 42b. The bushings include small diameter axial bores 45, sized slightly larger than the diameter of the consumable fine wire electrode 90 which passes therethrough and which is positioned so as to project within the groove 69 of the drive wheel 65. In order to insure frictional drive of the fine wire electrode 90, and the pulling of the wire electrode 90 from its source, the idler wheel 54 is mounted for rotation about its axis on an axle or pin 56 fixed to idler wheel mounting arm 50. In turn, one end 50a of the idler wheel mounting arm 50 is pivotally mounted by way of mounting screw 52 to the bottom of right side block 42b, Figure 3. Additionally, an adjustable tension spring 110 has one end affixed to a left side block 42a on its bottom surface by means of a tension spring mounting plate 108 and screw 112. Spring 110 has a second end coupled to tension adjuster lever 115 carried by arm 50. Lever 115 pivots in the direction shown by double headed arrow 114. Thus, the adjustable tension spring 110 (or a rubber band equivalent thereto) adjusts the idler wheel 54 compression on drive wheel 65 which compression must be higher for a hard metal consumable fine wire electrode such as steel in contrast to one formed of a soft metal such as aluminum where low compression is exerted. By utilizing a drive wheel 65 which screws into the tapped hole 69 of the driven gear 61, it may be readily interchanged with other drive wheels for different wire sizes and types with the groove 69 within the periphery of the drive wheel 65 varying in diameter to match the diameter of the consumable wire electrode. Extending outwardly of the right side block section 42b and mounted thereto is an electrode nozzle assembly indicated generally at 72. Assembly 72 is coupled to block 42 via a conductor indicated generally at 64, forming a part thereof. Conductor tube 64 is composed of a pair of external threaded pipes 66, 68 coupled together by a "T" coupling 70. Bore 46 within right side block section 42b is tapped so as to receive the threaded end of pipe 66. The electrode nozzle assembly 72 may constitute a nozzle assembly such as that sold under the trade name TWECO. It comprises a nozzle 76 having a small diameter nozzle bore 88 and counter bore 82 leading to an insulator cavity 84 housing insulator 85. Further, a gas diffuser 86 is carried within counter bore 82 and bore 88. To the left, Figure 2, a further counter bore 87 of nozzle 76 is threaded and sized to the external thread of pipe 68. "T" coupling 70 is connected to hose 98 supplying a shield gas to electrode nozzle assembly 72.

Further, bore 46 of left side block 42a carries a terminal 89, which is connected to one end of a wire guide hose 48 of plastic material. The wire guide hose 48 is formed of plastic for insulating the consumable fine wire electrode 90 as it passes to the right angle drive reduction gear assembly for feed by drive wheel 65. The consumable fine wire electrode 90 is stored in coil form on a spool 92 which mounts for rotation horizontally about its axis on axle 94 within rear end 32b of the upper cover 32. In that respect, oppositely aligned paired holes 96 within the upper cover sidewalls support the spool 92 for rotation with the wire being pulled off the spool due to the frictional drive between the drive wheel 65 and the idler wheel 54.

Turning to Figure 4, the welding system is schematically represented in one form, in which the attachment 10 is mounted to conventional electric motor driven hand drill 12. In that respect, one end of DC cable 100 has an exposed conductor 101 swaged to terminal 102 with terminal 102 being mounted to the conductive metal block 42a by way of a mounting screw 104 with a lock washer 106 interposed between the head of the screw 104 and the face of the block against which the terminal 102 contacts is in flush engagement. A tapped hole 103 receives the threaded end 104a of screw 104, Figure 2. The DC cable 100 attaches at its opposite end to the positive terminal 122b, for instance, of one of two lead acid auto or deep cycle storage batteries 122 which are series connected. The series connection is made via a short length cable 123 from the negative terminal 122a of one battery to the positive terminal 122b of the adjacent battery 122. In turn, a further DC cable 120 connects at one end to negative terminal 122a of the second battery and terminates in a mechanical clamp 118 which detachably clamps to the workpiece 116 functioning as the first electrode for the arc welding system. The consumable fine wire second electrode 90 when positioned adjacent to the workpiece 116 creates arc 124 and the tip of the fine wire electrode 90 is consumed in the process. The speed of the weld and the arc power is controlled by the drive speed of the electrical motor 28 for hand drill 12 feeding the wire electrode to arc 124.

In addition, as shown in Figure 4, an inert or other shield gas, if used, is fed via hose 98 to surround the arc 124 by escaping from the small diameter bore 88 of nozzle 76. The shield gas is supplied form a tank or bottle 126 controlled by regulator 12 and flow may be shut off by either a manual valve or a solenoid valve such as valve 130 and connected between attachment 10 and the regulator 28.

With bevel gears 59, 61 sized to provide a 2 to 1 speed reduction, the fine wire electrode is pulled through the attachment 10 with ease. Variable speed drive may be assured and with input provision of a 24 volt arc power source such as two ordinary 12 volt lead acid storage batteries, the fine wire consumable electrode 90 may constitute a 0.11 cm (0.045 inch) flux core mild steel wire which may be used without a shielding gas. An inert/shielding gas may be employed as necessary. A standard TWECO No. 2 MIG torch tip may form nozzle assembly 72 readily mounted via its contact tube 64 to the end of block 42 remote from the source of the wire electrode 90.

Attachment 10 makes ready provision for changing the drive wheels or capstans and adjusting the tension on the idler wheel to suit different types of wire electrodes being fed. Either polarity may be used and drive wheel speed control is achieved by speed control incorporated in the drill, sufficiently geared down to the 2 to 1 by right angle reduction. A 1.27 cm (0.5 inch) drive wheel provides 4 cm (1.57 linear inch) of wire feed per revolution so that surges and uneven wire feed speed are avoided when the speed is varied during welding. The deep-cycle or auto batteries 122 may be of the 80 amp hour type. As appreciated, it is simple and quick to change loads, tips, gases, polarity and speeds. Of course, as the diameter of the fine wire electrode 90 increases, it may be necessary to use a higher speed 0.6 cm (1/4 inch) electric drill rather than a 0.9 cm (3/8 inch) electric drill. The invention has application to 300 and 600 RPM rechargeable drills with or without speed control particularly for welding 0.3 cm (1/8") aluminum by reversing 90° angle drive from 2:1 reduction to 1:2 increase in drive speed. Further, all 6 and 9.5 volt DC drills can be run on 12 volts for more speed. The applicant has found that it is both possible and safe to have the drill running on a power source which is entirely independent of the 24 volt arc power source. The applicant has found that the common car battery has so little internal resistance and such immense power that one does not vary the arc voltage significantly by attempting to vary the arc distance and so, fortuitously, an ordinary auto battery happens to be an ideal source of inherently stable arc voltage. As such, the applicant derives the versatility of a variable speed wire drive without expensive electronic complications that are normally required when utilizing a common electrical source for both the wire drive and the arc power. A DC battery such as an ordinary auto battery, or several DC batteries in series such as batteries 122, Figure 4, may additionally function as the source of DC power to the drill motor of the 12 V DC electric drill 12 in which case, the connection is made via line 29' as shown in dotted form and in which, the two electrical wires 39 thereof connect to the positive and negative electrodes 122b, 122a of a battery 122. In such case, the arc source is formed by the two batteries 122 in series, while the source of drive power for the hand drill motor of hand drill 12 is a single one of the batteries with the circuit including the drive motor 22 being across a single battery and the circuit including the arc 124 across both batteries.

It should be kept in mind that the ordinary electric hand drill may be of the conventional 110 volt AC type. It may be 220 volt AC, it may be 12 volt DC, rechargeable or any other powered hand drill capable of feeding the consumable fine wire electrode. Further, the consumable wire electrode (which is shown as positive in Figure 4) may be of either polarity (i.e. positive or negative) without affecting the motor drive at all since the motor drive is electrically independent of arc power. Therefore, no changes are required for the drill to which the welding attachment is coupled. (In some units changing arc polarity causes the drive motor to reverse and this must be adjusted for by separate means).

While there has been described what is at present considered to be the preferred embodiments of this invention, it will be obvious to those skilled in the art that various changes and modifications can be made within the scope of the appended Claims.

## Claims

1. A consumable wire electrode welding system including:
a metal workpiece (116) acting as a first electrode, a consumable fine wire second electrode (90), means (28, 38, 42) for feeding said consumable fine wire second electrode (90) towards said metal workpiece (116) for initiating and maintaining an electrical arc (124) therebetween, said feeding means including an electric drive motor (28), a first arc power means (122, 122) connected between said electrodes for creating an electrical welding arc therebetween, second electrical drive power means (122) for energizing said electric drive motor, control means (18) for selectively connecting said second electric drive power means (122) to said electric motor and for varying the power supply thereto for the purpose of varying the speed of the consumable wire electrode feed; the welding system being characterised by an electric hand drill (12) including said electric drive motor (28), said control means (18), and an electrically insulated drill casing (14); a welder attachment (10) for said electric hand drill (12); said drill drive electric motor (28) being connectable to said second power means (29), said motor (28) including a motor shaft (24) having an end projecting outwardly of the drill casing and switch means (18) mounted to said drill casing (14) and capable of selectively connecting and disconnecting said electric motor (28) to said second power means (122);
said welder attachment comprising: means (30) for relative attachment of said welder attachment (10) to said hand drill, a frictional wire drive means (38) for coupling to the drill motor shaft (24) for feeding said consumable, fine wire second electrode (90), an electrode nozzle assembly (72) connected to the wire drive means and including a metal conductor tube (64) receiving said fine wire second electrode (90) fed by the wire drive means, and means (64) for connecting said first electrical arc power source to said metal conductor tube (64) such that, when said second electrical power means (122, 122) is connected to the workpiece (116) to create a potential difference and said fine wire second electrode (90) is positioned in juxtaposition to the workpiece (116), an electric arc (124) is created therebetween capable of melting the tip of the fine wire second electrode (90) to effect welding, wherein the speed of wire feed is adapted to be controlled by said motor switch means (18).

2. A welding system according to Claim 1, particularly a MIG welding system, wherein said electrode nozzle assembly metal conductor tube includes a "T" coupling (70) for connection to a source of inert shield gas (126) for delivering shield gas about the consumable fine wire second electrode (90) as it is fed through said electrode nozzle assembly (72) and about the area downstream of the nozzle.

3. A welding system according to Claim 1 or 2, wherein said welder attachment further comprises a spool (92) mounted for rotation about its axis within said means for relative attachment (30), said spool carrying said fine wire second electrode (90) and functioning as a fine wire second electrode supply.

4. A welding system according to one of Claims 1 - 3, wherein said hand drill (12) is of pistol form with a hand grip (16) at right angles to the drill casing housing the electric motor, said switch means (18) is mounted within said hand grip (16) and wherein said frictional wire drive means comprises a right angle drive unit mounted within a portion of the means for relative attachment (30) for overlying the protruding drill motor drive shaft (24) for direct mechanical coupling to the drill motor drive shaft (24).

5. A welding system according to Claim 4, wherein said means for relative attachment further supports a wire guide assembly (42) said wire guide assembly comprising laterally spaced, aligned metallic blocks (42a, 42b) integral with the right angle drive unit, aligned bores within said wire guide assembly blocks (42a, 42b), cylindrical bushings (44) within said bores, said cylindrical bushings including axial passages (45) receiving said fine wire second electrode (90) with the fine wire second electrode (90) extending across the gap between said bushings, said right angle drive unit (38) terminating in a drive wheel (65) positioned within said gap and at right angles to the fine wire second electrode (90) passing across the gap, a peripheral groove (69) within the drive wheel, the fine wire electrode (90) being positioned within said groove (69), and means (50) for spring biasing an idler wheel (54) mounted for rotation about its axis parallel to the axis of the drive wheel (65) for peripheral engagement with the periphery of the drive wheel (65) for sandwiching the fine wire second electrode (90) between the idler wheel (54) and the drive wheel (65) and within said groove (69) such that rotation of the drive wheel (65) effects frictional pulling of the fine wire electrode through the wire guide assembly.

6. A welding system according to Claim 5, wherein at least one of said blocks (42a, 42b), the drive wheel (65) and the conductor tube (64), is formed of conductive metal and constitutes a terminal for a low voltage DC cable (100) of said DC power source (122, 122), said metal conductor tube is directly affixed to one end of said at least one block in axial alignment with one (42b) of said wire guide assembly blocks and is coupled to said DC source, said conductor tube (64) is of the diameter slightly in excess of that of said fine wire second electrode passing therethrough and, a "T" coupling (70) is integrated with the conductor tube (64) for coupling to a source (126) of inert shielding gas so as to feed inert gas through the conductor tube (64) and about the fine wire second electrode (90) such that the shielding gas surrounds the fine wire second electrode as it exists from the electrode nozzle assembly (72) and envelopes the arc (124) created between the consumable fine wire second electrode (90) and the workpiece first electrode (116).

7. A welding system according to one of Claims 1 - 6, wherein said means for relative attachment comprises a cover (30) and said cover (30) comprises flexible, dielectric paired sidewalls (32) enveloping the hand drill casing (14) portion housing the electric drill motor (28), paired slots (36) within the cover sidewalls (32) and a strap (37) positioned within said sidewall slots (36) for enveloping the hand drill casing (14) and said cover (30) to detachably mount the cover to the hand drill casing (14).

8. A welding system according to any of the preceding Claims wherein said first arc power means and said second electrical drive power means comprises at least one storage battery (122, 122) and wherein separate circuits (100, 29') are defined by said at least one storage battery (122, 122) and said electrodes (116, 90) and said at least one storage battery (122) and said electric drive motor (28), which separate circuits are substantially electrically unaffected by each other such that there is no appreciable drop in arc voltage resulting from variation in drive speed of said motor or vice versa with said at least one battery (122) constituting an inherently stable, totally unregulated welding arc power supply.

9. A welder attachment (10) for an electric hand drill (12) for welding a metal workpiece (116) acting as a first electrode, said hand drill (12) comprising:
an electrically insulated drill casing (14), a drill drive electric motor (28), said motor (28) including a motor shaft (24) having an end projecting outwardly of the drill casing, a first electrical power source for supplying electrical power to said motor, switch means (18) mounted to said drill casing (14) for selectively connecting and disconnecting the first electrical source to said electric motor (28),
said welder attachment comprising: a cover (30) for attachment to the drill casing, a frictional wire drive means (38) for coupling to the drill motor shaft (24) for feeding a consumable, fine wire second electrode (90), an electrode nozzle assembly (72) connected to the wire drive means and including a metal conductor tube (64) receiving said fine wire second electrode (90) fed by the wire drive means (42) and means (64) for connecting a second DC electrical arc power source to said metal conductor tube (64) such that, when said second DC electrical power source (122, 122) is connected to the workpiece first electrode (116) to create a potential difference and said fine wire second electrode (90) is positioned in juxtaposition to the workpiece first electrode (116), an electric arc (124) is created therebetween capable of melting the tip of the fine wire second electrode (90) to effect welding, wherein the speed of wire feed is adapted to be controlled by said motor switch means (18) and wherein the arc power is independent of that of the power source (100) for the hand drill motor and wherein both soft and hard consumable wire electrodes may be readily employed as the source of weld material.

10. The welder attachment according to claim 9 for an MIG welding system, wherein said electrode nozzle assembly metal conductor tube includes a "T" coupling (70) for connection to a source of inert shield gas (126) for delivering shield gas about the consumable, fine wire second electrode (90) as it is fed through said electrode nozzle assembly (72) and about the area downstream of the nozzle.

11. The welder attachment according to claim 9 or 10 further comprising a spool (92) mounted for rotation about its axis within said cover (30), said spool carrying said fine wire second electrode (90) and functioning as a fine wire second electrode supply.

12. The welder attachment according to any one of claims 9 - 11 wherein said hand drill (12) is of pistol form with a hand grip (16) at right angles to the drill casing housing the electric motor, said trigger switch (18) is mounted within said hand grip (16) and wherein said frictional wire drive means comprises a right angle drive unit mounted within a portion of the cover (30) for overlying the protruding drill motor drive shaft (24) for direct mechanical coupling to the drill motor drive shaft (24).

13. The welder attachment according to claim 12, wherein said cover further supports a wire guide assembly (42), said wire guide assembly comprising laterally spaced, aligned metallic blocks (42a, 42b) integral with the right angle drive unit, aligned bores within said wire guide assembly blocks (42a, 42b), cylindrical bushings (44) within said bores, said cylindrical bushings including axial passages (45) receiving said fine wire second electrode (90) with the fine wire second electrode (90) extending across the gap between said bushings, said right angle drive unit (38) terminating in a drive wheel (65) positioned within said gap and at right angles to the fine wire second electrode (90) passing across the gap, a peripheral groove (69) within the drive wheel, the fine wire electrode (90) being positioned within said groove (69), and means (50) for spring biasing an idler wheel (54) mounted for rotation about its axis parallel to the axis of the drive wheel (65) for peripheral engagement with the periphery of the drive wheel (65) for sandwiching the fine wire second electrode (90) between the idler wheel (54) and the drive wheel (65) and within said groove (69) such that rotation of the drive wheel (65) effects frictional pulling of the fine wire electrode through the wire guide assembly.

14. The welder attachment according to claim 13, wherein at least one of said blocks (42a, 42b), the drive wheel (65) and the conductor tube (64), is formed of conductive metal and constitutes a terminal for a low voltage DC cable (100) of said DC power source (122, 122), said metal conductor tube is directly affixed to one end of said at least one block in axial alignment with one (42b) of said wire guide assembly blocks and is coupled to said DC source, said conductor tube 64 is of the diameter slightly in excess of that of said fine wire second electrode passing therethrough and, a "T" coupling (70) is integrated with the conductor tube (64) for coupling to a source (126) of inert shielding gas so as to feed inert gas through the conductor tube (64) and about the fine wire second electrode (90) such that the shielding gas surrounds the fine wire second electrode as it exists from the electrode nozzle assembly (72) and envelopes the arc (124) created between the consumable fine wire second electrode (90) and the workpiece first electrode (116).

15. The welder attachment according to any one of claims 9 - 14 wherein said cover (30) comprises flexible, dielectric paired sidewalls (32) enveloping the hand drill casing (14) portion housing the electric drill motor (28), paired slots (36) within the cover sidewalls (32) and a strap (37) positioned within said sidewall slots (36) for enveloping the hand drill casing (14) and said cover (30) to detachably mount the cover to the hand drill casing (14).

16. The use of a consumable wire electrode welding system according to any of claims 1-8.

17. The use of a welder attachment according to any of claims 9-15.

## Patentansprüche

1. Abschmelzdrahtelektroden-Schweißsystem, das enthält:
ein Metallwerkstück (116), das als erste Elektrode dient, eine zweite Elektrode (90) aus Abschmelz-Dünndraht, eine Einrichtung (28, 38, 42) zur Zufuhr der zweiten Elektrode (90) aus Dünndraht in Richtung das Metallwerkstücks (116) zur Auslösung und Aufrechterhaltung eines elektrischen Lichtbogens (124) zwischen selbigen, wobei die Zufuhreinrichtung einen Elektroantriebsmotor (28), eine erste Lichtbogen-Spannungseinrichtung (122, 122), die zwischen die Elektroden geschaltet ist und einen elektrischen Schweißlichtbogen zwischen selbigen erzeugt, eine zweite elektrische Antriebsspannungseinrichtung (122) zur Spannungsversorgung des Elektroantriebsmotors, eine Steuereinrichtung (18) zum wahlweisen Schalten der zweiten elektrischen Antriebsspannungseinrichtung (122) an den Elektromotor und zur Veränderung der Spannungszufuhr zu selbigem, um die Geschwindigkeit der Zufuhr der Abschmelzdrahtelektrode zu variieren enthält; wobei das Schweißsystem durch eine elektrische Handbohrmaschine (12) gekennzeichnet ist, die den Elektroantriebsmotor (28), die Steuereinrichtung (18) und einen elektrisch isolierten Bohrgehäuse (14) sowie eine Schweißzusatzeinrichtung (10) für die elektrische Handbohrmaschine (12) enthält; wobei der Bohrantriebselektromotor (28) an die zweite Spannungseinrichtung (29 geschaltet werden kann; wobei der Motor (28) eine Motorwelle (24) mit einem Ende, das nach außen aus dem Bohrgehäuse vorsteht, und eine Schalteinrichtung (18) enthält, die an dem Bohrgehäuse (14) angebracht ist und den Elektromotor (28) wahlweise an die zweite Spannungseinrichtung (122) schalten und von ihr trennen kann;
wobei die Schweißzusatzeinrichtung umfaßt: eine Einrichtung (30) zur relativen Anbringung der Schweißzusatzeinrichtung (10) an der Handbohrmaschine, eine Reibungsdrahttransporteinrichtung (38) zur Ankopplung an die Bohrmotorwelle (24) für die Zufuhr der zweiten Elektrode (90) aus Dünndraht, eine Elektrodendüsenanordnung (72), die mit der Drahttransporteinrichtung verbunden ist und eine Metalleiterröhre (64) enthält, die die durch die Drahttransporteinrichtung zugeführte zweite Elektrode (90) aus Dünndraht aufnimmt, sowie eine Einrichtung (64) zum Schalten der ersten Spannungsquelle für den elektrischen Lichtbogen an die Metalleiterröhre (64), so daß, wenn die zweite elektrische Spannungseinrichtung (122, 122) zur Erzeugung einer Potentialdifferenz an das Werkstück (116) geschaltat wird und die zweite Elektrode (90) aus Dünndraht neben dem Werkstück (116) angeordnet ist, ein elektrischer Lichtbogen (124) zwischen selbigen erzeugt wird, der in der Lage ist, die Spitze der zweiten Elektrode (90) aus Dünndraht Zu schmelzen und so Schweißung zu bewirken, wobei die Geschwindigkeit der Drahtzufuhr durch die Motorschalteinrichtung (18) gesteuert werden kann.

2. Schweißsystem nach Anspruch 1, insbesondere ein MIG-Schweißsystem, wobei die Elektrodendüsenanordnungs-Metalleiterröhre eine T-Kupplung (70) zum Anschluß einer Quelle von Inert-Schutzgas (126) enthält, um Schutzgas um die zweite Elektrode (90) aus Abschmelz-Dünndraht herum abzugeben, wenn sie durch die Elektrodendüsenanordnung (72) zugeführt wird, sowie um den stromab der Düse gelegenen Bereich herum.

3. Schweißsystem nach Anspruch 1 oder 2, wobei die Schweißzusatzeinrichtung des weiteren eine Spule (92) umfaßt, die um ihre Achse drehbar in der Einrichtung zur relativen Anbringung (30) angebracht ist, wobei die Spule die zweite Elektrode (90) aus Dünndraht trägt und als Vorrat der zweiten Elektrode aus Dünndraht dient.

4. Schweißsystem nach einem der Ansprüche 1 bis 3, wobei die Handbohrmaschine (12) Pistolenform hat und sich ein Handgriff (16) im rechten Winkel zum Bohrgehäuse befindet, das den Elektromotor aufnimmt, wobei die Schalteinrichtung (18) in dem Handgriff (16) angebracht ist, und wobei die Reibungsdrahttransporteinrichtung eine rechtwinklige Transporteinheit umfaßt, die in einem Abschnitt der Einrichtung (30) zur relativen Anbringung angebracht ist, die die vorstehende Bohrmotorantriebswelle (24) überlagert und direkt mechanisch an die Bohrmotorantriebswelle (24) gekoppelt ist.

5. Schweißsystem nach Anspruch 4, wobei die Einrichtung zur relativen Anbringung des weiteren eine Drahtführungsanordnung (42) trägt, wobei die Drahtführungsanordnung seitlich beabstandete, fluchtende Metallblöcke (42a, 42b) umfaßt, die aus einem Stück mit der rechtwinkligen Transporteinheit bestehen, fluchtende Bohrungen in den Blöcken (42a, 42b) der Drahtführungsanordnung, zylindrische Buchsen (44) in den Bohrungen, wobei die zylindrischen Buchsen axiale Durchgänge (45) enthalten, die die zweite Elektrode (90) aus Dünndraht aufnehmen, wobei sich die zweite Elektrode (90) aus Dünndraht über den Spalt zwischen den Buchsen erstreckt, wobei die rechtwinklige Transporteinheit (38) in einem Transportrad (65) endet, das sich in dem Spalt und im rechten Winkel zur zweiten Elektrode (90) aus Dünndraht befindet, die über den Spalt verläuft, eine Umfangsnut (69) in dem Transportrad, wobei sich die Dünndrahtelektrode (90) in der Nut (69) befindet, sowie eine Einrichtung (50) zur Federspannung eines Laufrades (54), das drehbar um seine Achse parallel zur Achse des Transportrades (65) angebracht ist, mit dem Umfang des Transportrades (65) in Umfangskontakt ist und die zweite Elektrode (90) aus Dünndraht zwischen dem Laufrad (54) und dem Transportrad (65) in der Nut (69) einschließt, so daß Drehung des Transportrades (65) auf Reibung beruhendes Ziehen der Dünndrahtelektrode durch die Drahtführungsanordnung bewirkt.

6. Schweißsystem nach Anspruch 5, wobei wenigstens einer der Blöcke (42a, 42b), das Transportrad (65) und die Leiterröhre (64) aus leitendem Metall besteht und einen Anschluß für ein Niedriggleichspannungskabel (100) der Gleichspannungsquelle (122, 122) bildet, wobei die Metalleiterröhre direkt an einem Ende des wenigstens einen Blocks axial fluchtend mit einem (42b) der Drahtführungsanordnungsblöcke befestigt ist und an die Gleichspannungsquelle angeschlossen ist, wobei die Leiterröhre (64) einen Durchmesser hat, der etwas über dem der zweiten Elektrode aus Dünndraht liegt, die durch sie verlauft, und eine T-Kupplung (70) in die Leiterröhre (64) integriert ist, die an eine Quelle (126) von Inert-Schutzgas angeschlossen ist, um Inertgas durch die Leiterröhre (64) und um die zweite Elektrode (90) aus Dünndraht herum zuzuführen, so daß das Schutzgas die zweite Elektrode aus Dünndraht umgibt, wenn sie von der Elektrodendüsenanordnung (72) aus vorhanden ist, und den Lichtbogen (124) umhüllt, der zwischen der zweiten Elektrode (90) aus Abschmelz-Dünndraht und der ersten Elektrode (116) in Form des Werkstücks erzeugt wird.

7. Schweißsystem nach einem der Ansprüche 1 bis 6, wobei die Einrichtung zur relativen Anbringung eine Abdeckung (30) umfaßt, und die Abdeckung (30) flexible, dielektrische, paarige Seitenwände (32) umfaßt, die den Abschnitt des Handbohrmaschinengehäuses (14) umgeben, der den Elektrobohrmotor (28) aufnimmt, paarige Schlitze (36) in den Abdeckungsseitenwänden (32) sowie einen Riemen (37), der sich in den Seitenwandschlitzen (36) befindet, das Handbohrmaschinengehäuse (14) und die Abdeckung (30) umgibt und so die Abdeckung lösbar am Handbohrmaschinengehäuse (14) anbringt.

8. Schweißsystem nach einem der vorangehenden Ansprüche, wobei die erste Lichtbogenspannungseinrichtung und die zweite elektrische Antriebsspannungseinrichtung wenigetens eine Speicherbatterie (122, 122) umfaßt, und wobei separate Stromkreise (100, 29') durch die wenigstens eine Speicherbatterie (122, 122) und die Elektroden (116, 90) sowie durch die wenigstens eine Speicherbatterie (122) und den Elektroantriebsmotor (28) gebildet werden, wobei die separaten Stromkreise voneinander im wesentlichen nicht elektrisch beeinflußt werden, so daß es keinen merklichen Abfall der Lichtbogenspannung gibt, der aus Änderung der Antriebsgeschwindigkeit des Motors resultiert oder umgekehrt, wobei die wenigstens eine Batterie (122) eine an sich stabile, vollkommen ungeregelte Lichtbogen-Spannungsquelle bildet.

9. Schweißzusatzeinrichtung (10) für eine elektrische Handbohrmaschine (12) zum Schweißen eines Metallwerkstücks (116), das als eine erste Elektrode dient, wobei die Handbohrmaschine (12) umfaßt:
ein elektrisch isoliertes Bohrgehäuse (14), einen Bohrantriebselektromotor (28), wobei der Motor (28) eine Motorwelle (24) mit einem Ende enthält, das aus dem Bohrgehäuse nach außen vorsteht, eine erste elektrische Spannungsquelle zur Zufuhr elektrischer Spannung zu dem Motor, eine Schalteinrichtung (18), die an dem Bohrgehäuse (14) angebracht ist und die erste elektrische Quelle wahlweise an den Elektromotor (28) schaltet und von ihm trennt, wobei die Schweißzusatzeinrichtung umfaßt: eine Abdeckung (30) zur Anbringung am Bohrgehäuse, eine Reibungsdrahttransporteinrichtung (38) zur Ankopplung an die Bohrmotorwelle (24) für die Zufuhr einer zweiten Elektrode (90) aus Abschmelzdünndraht, eine Elektrodendüsenanordnung (72), die mit der Drahttransporteinrichtung verbunden ist und eine Metalleiterröhre (64) enthält, die die durch die Drahttransporteinrichtung (42) zugeführte zweite Elektrode (90) aus Dünndraht aufnimmt, sowie eine Einrichtung (64), die eine zweite Gleichspannungselektrolichtbogen-Spannungsquelle an die Metalleiterröhre (64) schaltet, so daß, wenn die zweite elektrische Gleichspannungsquelle (122, 122) zur Erzeugung einer Potentialdifferenz an die erste Elektrode (116) in Form des Werkstücke geschaltet wird und die zweite Elektrode (90) aus Dünndraht neben der ersten Elektrode (116) in Form des Werkstücks angeordnet ist, ein elektrischer Lichtbogen (124) zwischen selbigen erzeugt wird, der in der Lage ist, die Spitze der zweiten Elektrode (90) aus Dünndraht zu schmelzen und so Schweißung zu bewirken, wobei die Geschwindigkeit der Drahtzufuhr durch die Motorschalteinrichtung (18) gesteuert werden kann, und wobei die Lichtbogenspannung von der der Spannungsquelle (100) für den Handbohrmaschinenmotor unabhängig ist, und wobei sowohl weiche als auch harte Abschmelzdrahtelektroden einfach als Quelle des Schweißmaterials verwendet werden können.

10. Schweißzusatzeinrichtung nach Anspruch 9 für ein MIG-Schweißsystem, wobei die Elektrodendüsenanordnungs-Metalleiterröhre eine T-Kupplung (70) zum Anschluß einer Quelle von Inert-Schutzgas (126) enthält, um Schutzgas um die zweite Elektrode (90) aus Dünndraht herum abzugeben, wenn sie durch die Elektrodendüsenanordnung (72) zugeführt wird, sowie um den stromab der Düse gelegenen Bereich herum.

11. Schweißzusatzeinrichtung nach Anspruch 9 oder 10, die des weiteren eine Spule (92) umfaßt, die um ihre Achse drehbar in der Abdeckung (30) angebracht ist, wobei die Spule die zweite Elektrode (90) aus Dünndraht trägt und als Vorrat der zweiten Elektrode aus Dünndraht dient.

12. Schweißzusatzeinrichtung nach einem der Ansprüche 9 bis 11, wobei die Handbohrmaschine (12) Pistolenform hat und sich ein Handgriff (16) im rechten Winkel zum Bohrgehäuse befindet, das den Elektromotor aufnimmt, wobei die Schalteinrichtung (18) in dem Handgriff (16) angebracht ist, und wobei die Reibungsdrahttransporteinrichtung eine rechtwinklige Transporteinheit umfaßt, die in einem Abschnitt der Einrichtung (30) zur relativen Anbringung angebracht ist, die die vorstehende Bohrmotorantriebswelle (24) überlagert und direkt mechanisch an die Bohrmotorantriebswelle (24) gekoppelt ist.

13. Schweißzusatzgerät nach Anspruch 12, wobei die Einrichtung zur relativen Anbringung des weiteren eine Drahtführungsanordnung (42) trägt, wobei die Drahtführungsanordnung seitlich beabstandete, fluchtende Metallblöcke (42a, 42b) umfaßt, die aus einem Stück mit der rechtwinkligen Transporteinheit bestehen, fluchtende Bohrungen in den Blöcken (42a, 42b) der Drahtführungsanordnung, zylindrische Buchsen (44) in den Bohrungen, wobei die zylindrischen Buchsen axiale Durchgänge (45) enthalten, die die zweite Elektrode (90) aus Dünndraht aufnehmen, wobei sich die zweite Elektrode (90) aus Dünndraht über den Spalt zwischen den Buchsen erstreckt, wobei die rechtwinklige Transporteinheit (38) in einem Transportrad (65) endet, das sich in dem Spalt und im rechten Winkel zur zweiten Elektrode (90) aus Dünndraht befindet, die über den Spalt verläuft, eine Umfangsnut (69) in dem Transportrad, wobei sich die Dünndrahtelektrode (90) in der Nut (69) befindet, sowie eine Einrichtung (50) zur Federspannung eines Laufrades (54), das drehbar um seine Achse parallel zur Achse des Transportrades (65) angebracht ist, mit den Umfang des Transportrades (65) in Umfangskontakt ist und die zweite Elektrode (90) aus Dünndraht zwischen dem Laufrad (54) und dem Transportrad (65) in der Nut (69) einschließt, so daß Drehung des Transportrades (65) auf Reibung beruhendes Ziehen der Dünndrahtelektrode durch die Drahtführungsanordnung bewirkt.

14. Schweißzusatzgerät nach Ansbruch 13, wobei wenigstens einer der Blöcke (42a, 42b), das Antriebsrad (65) und die Leiterröhre (64) aus leitendem Metall besteht und einen Anschluß für ein Niedriggleichspannungskabel (100) der Gleichspannungsquelle (122, 122) bildet, wobei die Metalleiterröhre direkt an einem Ende des wenigstens einen Blocks axial fluchtend mit einem (42b) der Drahtführungsanordnungsblöcke befestigt ist und an die Gleichspannungsquelle angeschlossen ist, wobei die Leiterröhre (64) einen Durchmesser hat, der etwas über dem der zweiten Elektrode aus Dünndraht liegt, die durch sie verläuft, und eine T-Kupplung (70) in die Leiterröhre (64) integriert ist, die an eine Quelle (126) von Inert-Schutzgas angeschlossen ist, um Inertgas durch die Leiterröhre (64) und um die zweite Elektrode (90) aus Dünndraht herum zuzuführen, so daß das Schutzgas die zweite Elektrode aus Dünndraht umgibt, wenn sie von der Elektrodendüsenanordnung (72) aus vorhanden ist, und den Lichtbogen (124) umhüllt, der zwischen der zweiten Elektrode (90) aus Abschmelz-Dünndraht und der ersten Elektrode (116) in Form des Werkstücks erzeugt wird.

15. Schweißzusatzgerät nach einem der Ansprüche 9 bis 14, wobei die Abdeckung (30) flexible, dielektrische paarige Seitenwände (32) umfasst, die den Abschnitt des Handbohrmaschinengehäuses (14) umgeben, der den Elektrobohrmotor (28) aufnimmt, paarige Schlitze (36) in den Abdeckungsseitenwänden (32) sowie einen Riemen (37), der sich in den Seitenwandschlitzen (36) befindet, das Handbohrmaschinengehäuse (14) und die Abdeckung (30) umgibt und so die Abdeckung lösbar am Handbohrmaschinengehäuse (14) anbringt.

16. Einsatz eines Abschmelzdrahtelektroden-Schweißsystems nach einem der Ansprüche 1 bis 8.

17. Einsatz einer Schweißzusatzeinrichtung nach einem der Ansprüche 9 bis 15.

## Revendications

1. Système de soudage à fil-électrode consommable, comprenant :
une pièce à usiner métallique (116) servant de première électrode, un deuxième fil-électrode (90) fin consommable, des moyens (28, 38, 42) pour amener le deuxième fil-électrode fin (90) consommable vers ladite pièce à usiner (116), pour faire démarrer et maintenir un arc électrique (124) entre eux, lesdits moyens d'amenée comprenant un moteur d'entraînement électrique (28), un premier moyen de puissance d'arc (122, 122) connecté entre lesdites électrodes, pour créer un arc de soudage électrique entre elles, un deuxième moyen de puissance d'entraînement électrique (122) pour activer ledit moteur d'entraînement électrique, un moyen de commande (18) pour connecter sélectivement ledit deuxième moyen de puissance d'entraînement électrique (122) audit moteur électrique et faire varier l'alimentation en puissance lui étant fournie, en vue de faire varier la vitesse d'amenée de fil-électrode consommable, le système de soudage étant caractérisé par un foret manuel électrique (12) comprenant ledit moteur d'entraînement électrique (28), ledit moyen de commande (18) et un boîtier de foret (14) isolé de l'électricité, une fixation de dispositif de soudage (10) pour ledit foret manuel électrique (12), ledit moteur électrique d'entraînement de foret (28) pouvant être connecté audit deuxième moyen de puissance (29), ledit moteur (28) comprenant un arbre de moteur (24) présentant une extrémité faisant saillie vers l'extérieur du boîtier de foret et un moyen de commutation (18), monté sur ledit boîtier de foret (14) et capable de connecter et de déconnecter sélectivement ledit moteur électrique (28) par rapport audit deuxième moyen de puissance (122),
ladite fixation de dispositif de soudage comprenant: un moyen (30) pour permettre la fixation relative de ladite fixation de dispositif de soudage (10) audit foret manuel, un moyen d'entraînement de fil à friction (38) pour effectuer un couplage avec l'arbre de moteur de foret (24), afin d'amener ledit deuxième fil-électrode fin consommable (90), un ensemble de buse d'électrode (72) connecté au moyen d'entraînement de fil et comprenant un tube conducteur métallique (64) recevant ledit deuxième fil-électrode fin (90) amené par le moyen d'entraînement de fil et un moyen (64) pour connecter ladite première source de puissance d'arc électrique audit tube conducteur métallique (64) de manière que, lorsque ledit deuxième moyen de puissance électrique (122, 122) est connecté à la pièce à usiner (116) pour produire une différence de potentiel et que ledit deuxième fil-électrode fin (90) est disposé en juxtaposition avec la pièce à usiner (116), un arc électrique (124) soit produit entre eux et capable de faire fondre le bout du deuxième fil-électrode fin (90), pour effectuer un soudage, dans lequel la vitesse d'amenée de fil est adaptée pour être commandée par ledit moyen de commutation de moteur (18).

2. Système de soudage selon la revendication 1, en particulier un système de soudage MIG, dans lequel ledit tube conducteur métallique d'ensemble de buse d'électrode comprend un couplage en forme de "T" (70) pour effectuer une connexion à une source de gaz protecteur inerte (126), en vue de fournir un gaz protecteur autour du deuxième fil-électrode fin consommable (90), lorsqu'il est amené dans ledit ensemble de buse d'électrode (72) et autour de la zone située en aval de la buse.

3. Système de soudage selon la revendication 1 ou 2, dans lequel ladite fixation de dispositif de soudage comprend une bobine (92) montée pour tourner autour de son axe, à l'intérieur dudit moyen de fixation relative (30), ladite bobine supportant ledit deuxième fil-électrode fin (90) et servant d'alimentation de deuxième fil-électrode fin.

4. Système de soudage selon l'une quelconque des revendications 1 à 3, dans lequel ledit foret manuel (12) se présente sous forme de pistolet pourvu d'une poignée de saisie (16), perpendiculaire au boîtier de foret logeant le moteur électrique, ledit moyen de commutation (18) est monté dans ladite poignée de saisie (16) et dans lequel ledit moyen d'entraînement de fil à friction comprend un ensemble d'entraînement perpendiculaire monté dans une partie du moyen de fixation relative (30), pour recouvrir l'arbre d'entraînement de moteur de foret (24) saillant, en vue d'effectuer un couplage mécanique direct avec l'arbre d'entraînement de moteur de foret (24).

5. Système de soudage selon la revendication 4, dans lequel ledit moyen de fixation relative supporte en outre un ensemble de guidage de fil (42), ledit ensemble de guidage de fil comprenant des blocs métallique alignés (42a, 42b) espacés latéralement, réalisés d'un seul tenant avec l'ensemble d'entraînement perpendiculaire, des alésages alignés ménagés dans lesdits blocs d'ensemble de guidage de fil (42a, 42b), des douilles cylindriques (44) situées dans lesdits alésages, lesdites douilles cylindriques comprenant des passages axiaux (45) logeant ledit deuxième fil-électrode fin (90) de manière à s'étendre sur l'interstice situé entre lesdites douilles, ledit ensemble d'entraînement perpendiculaire (38) se terminant par une roue d'entraînement (65) disposée dans ledit interstice et de façon perpendiculaire par rapport au deuxième fil-électrode fil (90) passant sur l'interstice, une gorge périphérique (69) ménagée dans la roue d'entraînement, le fil-électrode fin (90) étant disposé dans ladite gorge (69) et un moyen (50) pour déplacer élastiquement une roue de ralenti (54) montée pour tourner autour de son axe parallèle à l'axe de la roue d'entraînement (65), en vue d'établir un contact périphérique avec la périphérie de la roue d'entraînement (65), pour prendre en sandwich le deuxième fil-électrode fin (90) entre la roue de ralenti (54) et la roue d'entraînement (65) et à l'intérieur de ladite gorge (69), de manière que la rotation de la roue d'entraînement (65) effectue une traction à friction du fil-électrode fin dans l'ensemble de guidage de fil.

6. Système de soudage selon la revendication 5, dans lequel au moins l'un parmi lesdits blocs (42a, 42b), la roue d'entraînement (65) et le tube conducteur (64), est réalisé en métal conducteur et constitue une borne pour un câble de courant continu à basse tension (100) de ladite source de puissance de courant continu (122, 122), ledit tube conducteur métallique est directement fixé à une extrémité dudit au moins un bloc, en alignement axial (42b) avec lesdits blocs d'ensemble de guidage de fil et est couplé à ladite source de courant continu, ledit tube conducteur (64) est doté d'un diamètre légèrement supérieur à celui dudit deuxième fil-électrode fin passant en son sein et un couplage en "T" (70) est réalisé d'un seul tenant avec le tube conducteur (64), pour effectuer un couplage avec une source de gaz protecteur inerte (126), en vue d'amener le gaz inerte dans le tube conducteur (64) et autour du deuxième fil-électrode fin (90), de manière que le gaz protecteur entoure le deuxième fil-électrode fin, lorsqu'il sort de l'ensemble de buse d'électrode (72) et enveloppe l'air (124) produit entre le deuxième fil-électrode fin consommable (90) et la première électrode de pièce à usiner (116).

7. Système de soudage selon l'une quelconque des revendications 1 à 6, dans lequel ledit moyen de fixation relative comprend un couvercle (30) et ledit couvercle (30) comprend des parois latérales couplées (32) diélectriques flexibles, enveloppant la partie de boîtier de foret manuel (14) qui loge le moteur de foret électrique (28), des fentes couplées (36) ménagées dans les parois latérales de couvercle (32) et une bande (37) disposée dans lesdites fentes de paroi latérale (36), pour envelopper le boîtier de foret manuel (14) et ledit couvercle (30), en vue de permettre un montage amovible du couvercle sur le boîtier de foret manuel (14).

8. Système de soudage selon l'une quelconque des revendications précédentes, dans lequel ledit premier moyen de puissance d'arc et ledit deuxième moyen de puissance d'entraînement électrique comprennent au moins une pile de stockage (122, 122) et dans lequel des circuits séparés (100, 29') sont définis par ladite au moins une pile de stockage (122, 122), lesdites électrodes (116, 90), ladite au moins une pile de stockage (122) et ledit moteur d'entraînement électrique (28), ces circuits séparés étant sensiblement non-affectés électriquement entre eux, de manière qu'il n'existe aucune chute appréciable de tension d'arc due à la variation de vitesse d'entraînement dudit moteur ou vice et versa, ladite au moins une pile (122) constituant une source de puissance d'arc de soudage inhérent stable et totalement non-régulée.

9. Fixation de dispositif de soudage (10) pour un foret manuel électrique (12) en vue de souder une pièce à usiner métallique (116), servant de première électrode, ledit foret manuel (12) comprenant:
un boîtier de foret (14) isolé de l'électricité, un moteur électrique d'entraînement de foret (28), ledit moteur (28) comprenant un arbre de moteur (24) présentant une extrémité faisant saillie vers l'extérieur du boîtier de foret, une première source de puissance électrique pour fournir de la puissance électrique audit moteur, un moyen de commutation (18) monté sur ledit boîtier de foret (14), pour connecter et déconnecter sélectivement la première source électrique par rapport audit moteur électrique (28),
ladite fixation de dispositif de soudage comprenant: un couvercle (30) destiné à être fixé au boîtier de foret, un moyen d'entraînement de fil à friction (38), pour effectuer un couplage avec l'arbre de moteur de foret (24) en vue d'amener un deuxième fil-électrode fin consommable (90), un ensemble de buse d'électrode (72) connecté au moyen d'entraînement de fil et comprenant un tube conducteur métallique (64) logeant ledit deuxième fil-électrode fin (90), amené par ledit moyen d'entraînement de fil (42) et un moyen (64) pour connecter une deuxième source de puissance d'arc électrique de courant continu audit tube conducteur métallique (64) de manière que, lorsque ladite deuxième source de puissance électrique de courant continu (122, 122) est connecté à la première électrode de pièce à usiner (116) pour produite une différence de potentiel et que ledit deuxième fil-électrode fin (90) est disposé en juxtaposition avec la première électrode de pièce à usiner (116), un arc électrique (124) soit produit entre eux et capable de faire fondre le bout du deuxième fil-électrode fin (90), pour effectuer un soudage, dans lequel la vitesse d'amenée de fil est adaptée pour être commandée par ledit moyen de commutation de moteur (18) et dans lequel la puissance d'arc est indépendante de celle de la source de puissance (100) pour le moteur de foret manuel et dans lequel des fils-électrodes consommables à la fois souples et rigides peuvent être facilement utilisés code source de matériau de soudage.

10. Fixation de dispositif de soudage selon la revendication 9 pour un système de soudage MIG, dans lequel ledit tube conducteur métallique d'ensemble de buse d'électrode comprend un couplage en forme de "T" (70) pour effectuer une connexion à une source de gaz protecteur inerte (126), en vue de fournir un gaz protecteur autour du deuxième fil-électrode fin consommable (90), lorsqu'il est amené dans ledit ensemble de buse d'électrode (72) et autour de la zone située en aval de la buse.

11. Fixation de dispositif de soudage selon la revendication 9 ou 10, comprenant en outre une bobine (92) montée pour tourner autour de son axe, à l'intérieur dudit couvercle (30), ladite bobine supportant ledit deuxième fil-électrode fin (90) et servant d'alimentation de deuxième fil-électrode fin.

12. Fixation de dispositif de soudage selon l'une quelconque des revendications 9 à 11, dans lequel ledit foret manuel (12) se présente sous forme de pistolet pourvu d'une poignée de saisie (16), perpendiculaire au boîtier de foret logeant le moteur électrique, ledit commutateur de déclenchement (18) est monté dans ladite poignée de saisie (16) et dans lequel ledit moyen d'entraînement de fil à friction comprend un ensemble d'entraînement perpendiculaire monté dans une partie du couvercle (30), pour recouvrir l'arbre d'entraînement de moteur de foret (24) saillant, en vue d'effectuer un couplage mécanique direct avec l'arbre d'entraînement de moteur de foret (24).

13. Fixation de dispositif de soudage selon la revendication 12, dans lequel ledit couvercle supporte en outre un ensemble de guidage de fil (42), ledit ensemble de guidage de fil comprenant des blocs métallique alignés (42a, 42b) espacés latéralement, réalisés d'un seul tenant avec l'ensemble d'entraînement perpendiculaire, des alésages alignés ménagés dans lesdits blocs d'ensemble de guidage de fil (42a, 42b), des douilles cylindriques (44) situées dans lesdits alésages, lesdites douilles cylindriques comprenant des passages axiaux (45) logeant ledit deuxième fil-électrode fin (90) de manière a s'étendre sur l'interstice situé entre lesdites douilles, ledit ensemble d'entraînement perpendiculaire (38) se terminant par une roue d'entraînement (65) disposée dans ledit interstice et de façon perpendiculaire par rapport au deuxième fil-électrode fil (90) passant sur l'interstice, une gorge périphérique (69) ménagée dans la roue d'entraînement, le fil-électrode fin (90) étant disposé dans ladite gorge (69) et un moyen (50) pour déplacer élastiquement une roue libre (54) montée pour tourner autour de son axe parallèle à l'axe de la roue d'entraînement (65), en vue d'établir un contact périphérique avec la périphérie de la roue d'entraînement (65), pour prendre en sandwich le deuxième fil-électrode fin (90) entre la roue libre (54) et la roue d'entraînement (65) et à l'intérieur de ladite gorge (69), de manière que la rotation de la roue d'entraînement (65) effectue une traction à friction du fil-électrode fin dans l'ensemble de guidage de fil.

14. Fixation de dispositif de soudage selon la revendication 13, dans lequel au moins l'un parmi lesdits blocs (42a, 42b), la roue d'entraînement (65) et le tube conducteur (64), est réalisé en métal conducteur et constitue une borne pour un câble de courant continu à basse tension (100) de ladite source de puissance de courant continu (122, 122), ledit tube conducteur métallique est directement fixé à une extrémité dudit au moins un bloc, en alignement axial (42b) avec lesdits blocs d'ensemble de guidage de fil et est couplé à ladite source de courant continu, ledit tube conducteur (64) est doté d'un diamètre légèrement supérieur à celui dudit deuxième fil-électrode fin passant en son sein et un couplage en "T" (70) est réalisé d'un seul tenant avec le tube conducteur (64), pour effectuer un couplage avec une source de gaz protecteur inerte (126), en vue d'amener le gaz inerte dans le tube conducteur (64) et autour du deuxième fil-électrode fin (90), de manière que le gaz protecteur entoure le deuxième fil-électrode fin, lorsqu'il sort de l'ensemble de buse d'électrode (72) et enveloppe l'air (124) produit entre le deuxième fil-électrode fin consommable (90) et la première électrode de pièce à usiner (116).

15. Fixation de dispositif de soudage selon l'une quelconque des revendications 9 à 14, dans lequel ledit couvercle (30) comprend des parois latérales couplées (32) diélectriques flexibles, enveloppant la partie de boîtier de foret manuel (14) qui loge le moteur de foret électrique (28), des fentes couplées (36) ménagées dans les parois latérales de couvercle (32) et une bande (37) disposée dans lesdites fentes de paroi latérale (36), pour envelopper le boîtier de foret manuel (14) et ledit couvercle (30), en vue de permettre un montage amovible du couvercle sur le boîtier de foret manuel (14).

16. Utilisation d'un système de soudage à fil-électrode consommable selon l'une quelconque des revendications 1 à 8.

17. Utilisation d'une fixation de dispositif de soudage selon l'une quelconque des revendications 9 à 15.
